# EUROPÄISCHE PATENTSCHRIFT

(11) **EP 1 097 038 B1**
(45) Veröffentlichungstag und Bekanntmachung des Hinweises auf die Patenterteilung: **23.01.2002**
(21) Anmeldenummer: 99936264.3
(22) Anmeldetag: 15.05.1999
(51) Int. Cl.: B29C 65/02, B65B 13/32

(54) **VORRICHTUNG ZUM VERSCHWEISSEN VON BÄNDERN AUS THERMOPLASTISCHEM KUNSTSTOFF**
DEVICE FOR WELDING STRIPS OF A THERMOPLASTIC MATERIAL
DISPOSITIF POUR SOUDER DES BANDES EN MATERIAU THERMOPLASTIQUE

(30) Priorität: 15.07.1998 DE 19831665
(43) Veröffentlichungstag der Anmeldung: 09.05.2001
(73) Patentinhaber: Cyklop GmbH, 50996 Köln (DE)
(72) Erfinder: WEHR, Hubert, D-53332 Bornheim (DE)
(74) Vertreter: Hennicke, Ernst Rüdiger,Dipl.-Ing.
(86) Internationale Anmeldenummer: DE9901483
(87) Internationale Veröffentlichungsnummer: WO0003864

(56) Entgegenhaltungen:
- EP-A- 0 340 671
- DE-A- 4 321 874
- DE-B- 2 802 034
- FR-A- 1 494 989
- FR-A- 2 364 751
- US-A- 4 384 186
- US-A- 4 631 685
- PATENT ABSTRACTS OF JAPAN vol. 1999, no. 01, 29. Januar 1999 (1999-01-29) -& JP 10 264255 A (TOYOTA MOTOR CORP), 6. Oktober 1998 (1998-10-06)
- PATENT ABSTRACTS OF JAPAN vol. 010, no. 207 (M-500), 19. Juli 1986 (1986-07-19) -& JP 61 047239 A (BROTHER IND LTD), 7. März 1986 (1986-03-07)
- PATENT ABSTRACTS OF JAPAN vol. 008, no. 152 (M-309), 14. Juli 1984 (1984-07-14) -& JP 59 048117 A (FUJI KIKAI SEISAKUSHO:KK), 19. März 1984 (1984-03-19)

## Beschreibung

Die Erfindung betrifft eine Vorrichtung zum Verschweißen von Bändern aus thermoplastischem Kunststoff, insbesondere von Verpackungsbändern aus Polypropylen , mit einer Schweissvorrichtung zum Erwärmen durch Reibung der einander zugewandten Schweissflächen der miteinander zu verbindenden Bänder und mit einem an der Schweissstelle etwa senkrecht zu den Schweissflächen bewegbaren Druckelement zum Zusammenpressen der auf einer Stützfläche übereinander angeordneten Bänder.

Eine Vorrichtung dieser Art ist beispielsweise aus der DE-B-2 802 034 zu entnehmen.

Beim Verschweißen von Kunststoffbändern ist es üblich, die Schweißwärme während einer vorherbestimmtem Zeitdauer zuzuführen oder zu erzeugen, die nach der Erfahrung ausreicht, um die Bänder im Schweißbereich genügend zu erweichen und bei Anwendung von Druck innig miteinander zu verschmelzen. Hierbei hat sich jedoch gezeigt, daß die Festigkeit der Schweißstelle nicht immer ausreichend ist oder daß keine richtige Verschweißung stattgefunden hat. Der Grund hierfür liegt in Umwelteinflüssen und in Unregelmäßigkeiten bei der Wärmezufuhr, die beispielsweise dann auftreten, wenn die Spannung einer elektrischen Heizquelle und damit auch die Temperatur absinkt. Insbesondere bei Reibschweißgeräten, die netzunabhängig mit einem Akkumulator betrieben werden, wird mit absinkender Spannung auch die Drehzahl geringer, so daß die Bewegungen des Schwingers langsamer werden, der die aufeinanderliegenden Bänder zum Erzeugen von Reibungswärme gegeneinander bewegt. Die eingestellte Schweißzeit reicht dann zum Erzeugen der erforderlichen Schweißwärme nicht mehr aus, und es findet keine innige Verschmelzung der Bänder im Schweißbereich mehr statt.

Zum hermetischen Verschließen von Rohren oder Schläuchen aus thermoplastischem Material, in denen Blut oder Medikamente aufbewahrt werden, ist es bekannt (US-A-4,384,186), das Rohr oder den Schlauch unter Zufuhr von Wärme in einem begrenzten Bereich zusammenzudrücken und die Schweißwärmezufuhr zu unterbrechen, wenn die zusammengedrückten, verschweißten Rohre eine vorherbestimmte Gesamtdicke erreicht haben. Der Verschluß des Rohres wird nur durch örtliche Deformierung erreicht, die Ziel der Erwärmung ist.

Zum Verbinden von Spritzgußteilen aus thermoplastischem Kunststoff ist auch bereits eine Vorrichtung bekannt (US-A-4,631,685) mit der die zu verbindenden Teile unter Einwirkung von Druck und Wärme zusammengefügt werden. Ein hierfür verwendeter Druckstempel schaltet über einen Näherungsschalter einen Ultraschall-Heizkopf am Druckstempel ein und die Wärmezufuhr wird unterbrochen, sobald der Näherungsschalter nach genügender Erweichung des Fugenbereiches die gewünschte Dickenänderung der miteinander zu verbindenden Werkstückränder festgestellt hat.

Bei dieser Art der Verformung ergeben sich bei Spritzgußteilen keine Probleme, da diese das Gefüge des Grundmaterials haben und beliebig weit verformt und auch ganz durchwärmt werden können. Hierbei können die Spritzgußteile durch reichliche Erwärmung an der Fügestelle sogar umgeformt werden.

Zum Aufschweißen eines Deckels auf eine Kiste ist auch bereits eine Ultraschall-Reibschweißeinrichtung bekannt (FR-A-1 494 989), deren Schwingplatte den Deckel auf dem Kistenrand hin- und herbewegt. Durch die Reibungswärme werden Deckel und Kiste miteinander verschweißt und der Schwinger wird angehalten, sobald er mitsamt dem Deckel nach ausreichender Verschmelzung der Ränder um ein vorbestimmtes Maß abgesunken ist, das am Schwingergehäuse von einer Fühlstange abgetastet wird.

Die Handhabung dieser Vorrichtung ist umständlich, und Ultraschweißgeräte sind auch in der Herstellung und im Betrieb verhältnismäßig teuer.

Aufgabe der Erfindung ist es, eine Vorrichtung anzugeben, mit denen Verpackungsbänder aus thermoplastischem Kunststoff, insbesondere aus Polypropylen, einfach und zuverlässig auch bei sich ändernden Umwelteinflüssen miteinander verschweißt werden können.

Diese Aufgabe wird nach der Erfindung mit einer Vorrichtung gelöst, bei der das Druckelement mit einem Fühlelement verbunden ist, welches die Oberfläche der aufeinanderliegenden unverschweißten Bänder abtastet und ein Betätigungselement zum Ausschalten der Heizeinrichtung aufweist und wobei das Druckelement gegenüber dem Fühlelement in Richtung auf die Stützfläche begrenzt axial verschiebbar ist und bei seiner Verschiebung auf das Betätigungselement einwirkt.

Diese Ausgestaltung einer Vorrichtung zum Verschweißen von Kunststoffbändern hat den Vorteil, daß der Weg, den das Druckelement zum Erzeugen einer optimalen Verschweißung der Bänder zurücklegen muss, als Verhältniswert in Abhängigkeit von der Dicke der zu verschweißenden Bänder nach deren Zugfestigkeit eingestellt werden kann, welche Zugfestigkeit an der Schweißstelle mindestens 70% der Bruchlast des Bandes betragen muss. Hierbei spielt die Zeitdauer der Schweißwärmezufuhr keine Rolle mehr, so daß auch mit Akkugeräten einwandfreie Verschweißungen durchgeführt werden können, wenn die Spannung des Akkus bereits abgesunken ist, da die Erwärmung durch Reibung eine Funktion des Weges ist.

Vorteilhafte Weiter beldungen der Erfindung sind Gegenstand der abhängigen Ansprüche.

Das Betätigungselement Kann ein am Fühlelement schwenkbar gelagerter Hebel sein, der von einem am Druckelement angeordneten Mitnehmer beaufschlagt wird und an einem freien Ende einen verstellbaren Schaltfinger aufweist, der einen ersten Schalter betätigt, wenn die Verschiebung des Druckelementes gegenüber dem Fühlelement einen vorherbestimmten Wert erreicht.

Durch Verstellen des Schaltfingers kann der Sollwert für die Gesamtdicke der miteinander zu verschweißenden Bänder an der Schweißstelle eingestellt werden.

Es ist zweckmäßig, wenn der erste Schalter einen Ruhekontakt aufweist und mit einem zweiten Schalter in Reihe geschaltet ist, der die Heizeinrichtung einschaltet wenn er bei der Druckbeaufschlagung des Druckelementes betätigt wird.

Eine besonders einfache Konstruktion ergibt sich, wenn das Fühlelement einen Mitnehmerzapfen aufweist, dessen freies Ende in eine sich in Axialrichtung erstreckende, längliche Ausnehmung des Druckelementes eingreift, in der es von einem Federelement gegen die der Stützfläche zugewandte Stirnseite der Ausnehmung gedrückt gehalten wird und in der es sich entgegen der Wirkung der Feder verschieben kann, wenn sich das Druckelement beim Verschweißen gegenüber dem Fühlelement in Richtung auf die Stützfläche verschiebt.

Die Schweißwärme kann an der Schweißstelle auf verschiedene Weise erzeugt werden. Die Heizeinrichtung kann bei einer bevorzugten Ausführungsform der Erfindung eine Reibschweißvorrichtung sein, deren Schwinghebel ein das obere Band erfassendes Druckstück bewegt, welches Teil des Druckelementes ist und zusammen mit diesem in Richtung auf die Stützfläche gedrückt und von dem Schwinghebel quer zur Bandebene bewegt wird und zwischen den Bändern an der Schweißstelle Reibungswärme erzeugt.

Eine bevorzugte Ausführungsform der erfindungsgemäßen Vorrichtung wird durch die nachfolgende Beschreibung und die Zeichnungen an einem Ausführungsbeispiel näher erläutert. Es zeigt:

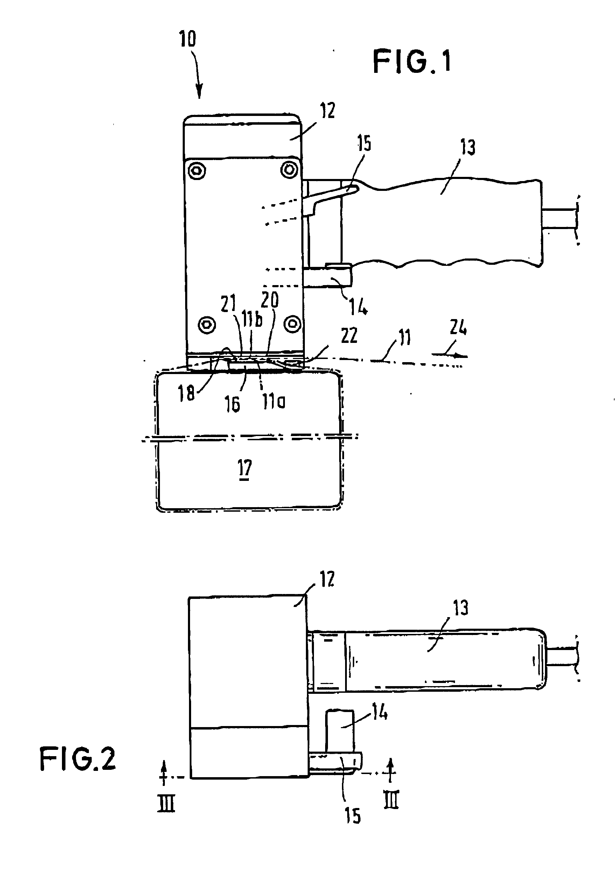

Fig. 1 eine Vorrichtung zum Verschweißen und Abschneiden von thermoplastischen Umreifungsbändern aus Kunststoff in einer Seitenansicht,
Fig. 2 den Gegenstand der Fig. 1 in einer Draufsicht,
Fig. 3 den Gegenstand der Fig. 2 in einem senkrechten Schnitt nach Linie III-III mit den eingelegten Kunststoffbändern vor Beginn des Schweißvorganges in vergrößertem Maßstab,
Fig. 4 eine der Fig. 3 analoge Darstellung der Schweißvorrichtung bei Beendigung des Schweißvorganges,
Fig. 5 den Gegenstand der Fig. 4 in einem senkrechten Teilschnitt nach Linie V-V und
Fig. 6 den Gegenstand der Fig. 5 in einem Horizontalschnitt nach Linie VI-VI.

In den Zeichnungen ist mit 10 eine Vorrichtung zum Verschweißen von Bändern 11 aus Kunststoff bezeichnet, die als Handgerät ausgebildet ist und ein Gehäuse 12, einen Handgriff 13, einen Klemmhebel 14 und einen Einschalthebel 15 aufweist. An der Unterseite des Gehäuses 12 befindet sich eine seitlich auskragende

Stützplatte 16, mit der 'die Vorrichtung 10 auf ein Packstück 17 aufgesetzt werden kann, das mit einem Band 11 aus Kunststoff umreift werden soll.

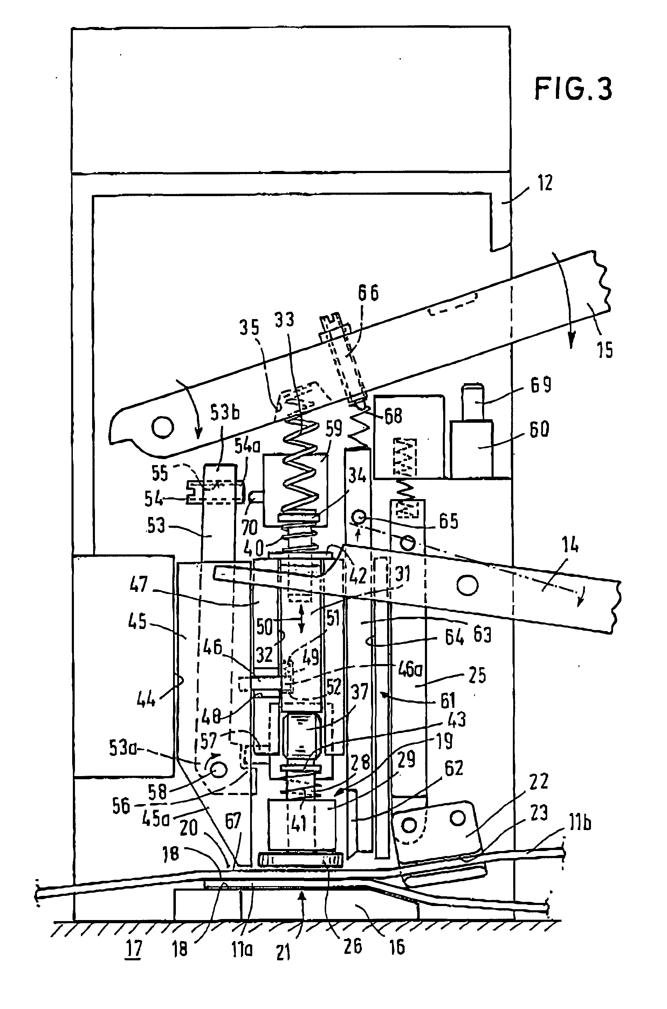

. Die Stützplatte 16 bildet mit ihrer oberen Stützfläche 18 und der im Gehäuse 12 untergebrachten Schweißvorrichtung 19 einen Bandkanal 20, in den die Bandenden 11a und 11b des um das Packstück 17 herumgelegten Bandes 11 so eingeschoben werden, daß sie auf der Stützfläche 18, die einen Schweißbereich oder die Schweißstelle 21 begrenzt, übereinanderliegen. Hierbei wird das untere Bandende 11a mit Hilfe einer schwenkbaren Klemme 22 auf der Stützplatte 16 festgeklemmt und das obere Bandende 11b durch eine Öffnung 23 in der Klemme 22 hindurchgezogen und in Richtung des Pfeiles 24 mit einer nicht näher dargestellten Spannvorrichtung oder von Hand gespannt gehalten. (Fig. 3).

Beim Einlegen der Bandenenden 11a und 11b in den Bandkanal 20 wird die Klemme 22 durch Anheben der an der Klemme 22 angelenkten, federbelasteten Druckstange 25 mit dem Klemmhebel 14 gelüftet.

Die Schweißvorrichtung 19, mit der die auf der Stützfläche 18 der Stützplatte 16 übereinanderliegenden und gespannten Bandenden 11a und 11b in einem begrenzten Bereich miteinander verschweißt werden, ist eine Reibschweißvorrichtung, mit der die Wärme zum Verschweißen der übereinanderliegenden Bandenden 11a und 11b dadurch erzeugt wird, daß die fest aufeinander gedrückten Bandenden 11a und 11b gegeneinander hin- und herbewegt werden. Derartige Reibschweißvorrichtungen sind bekannt und beispielsweise in den deutschen Patenten Nr. 31 18 710, Nr. 28 02 034 und Nr. 29 33 302 beschrieben und dargestellt. Die bei der vorliegenden Erfindung verwendete Reibschweißvorrichtung, welche die Heizeinrichtung zum Erzeugen der für die Verschweißung notwendigen Wärme darstellt, wird deshalb hier nicht mehr im einzelnen beschrieben, sondern es wird Bezug genommen auf die genannten Patentschriften, wobei hier nur diejenigen Teile der Reibschweißvorrichtung erwähnt werden, die mit anderen, für die vorliegende Erfindung wesentlichen Teilen zusammenwirken.

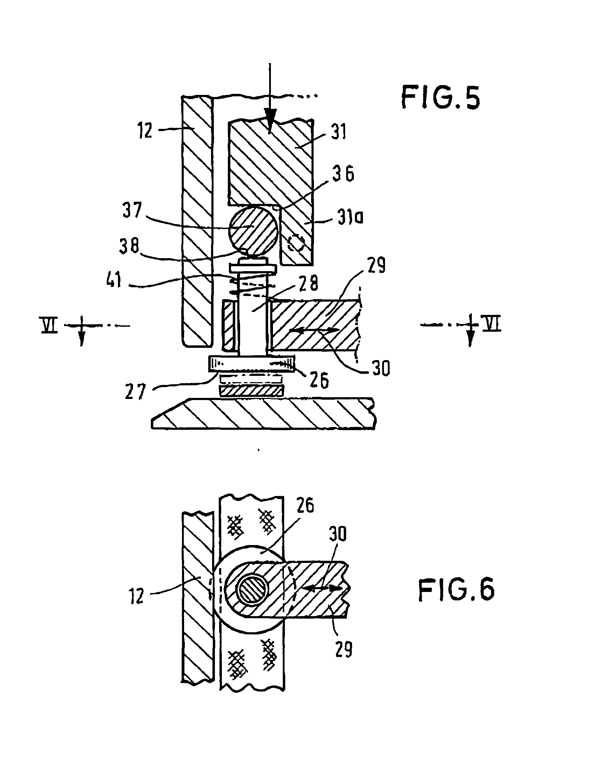

Von der Schweißvorrichtung 19, welche die Reibungswärme erzeugt und damit die Heizeinrichtung im Sinne der Erfindung darstellt, ist in den Fig. 3 bis 6 ein Druckstück 26 erkennbar, das auf dem oberen Bandende 11b aufliegt und mit seiner geriffelten Unterseite Formschluß mit dem oberen Bandende 11b hat. Ein auf der Oberseite des Druckstückes 26 befestigter Zapfen 28 durchgreift einen Schwinghebel 29, der von einem nicht näher dargestellten Exzentertrieb in Richtung des Pfeiles 30 quer zur Längsrichtung des Bandes 11 in rascher Folge hin- und herbewegt wird. Die geriffelte Unterseite 27 des Druckstückes 26 nimmt hierbei das obere Bandende 11b mit und reibt es auf dem unteren Bandende 11a hin- und her, wodurch an dieser Schweißstelle 21 Reibungswärme erzeugt wird, welche die Bandenden 11a und 11b in einem begrenzten Schweißbereich soweit erwärmt, daß das Kunststoffmaterial der Bandenden 11a uns 11b auf den einander zugewandten Flächen schmilzt und sich miteinander vermischt, wodurch unter Einwirkung von Druck die Bandenden miteinander verschweißt werden.

Der zum Erzeugen der Reibungswärme und zum Herstellen der Verschweißung erforderliche Druck wird von einem Druckelement 31 erzeugt, das von einem Druckstempel gebildet wird, der oberhalb des Druckstückes 26 in einer Gleitführung 32 vertikal verschiebbar ist. Das Druckelement 31 steht unter der Wirkung einer kräftigen Druckfeder 33, die sich einerseits auf einem oberen Bund 34 des Druckelementes 31 und andererseits in einer Ausnehmung 35 des oben erwähnten Einschalthebels abstützt. An seinem unteren Ende 31a hat das Druckelement 31 eine randoffene Ausnehmung 36, in der eine Druckrolle 37 untergebracht ist, über welche das Druckelement 31 auf die obere Stirnfläche 38 des Zapfens 28 wirkt, während dieser unter der Druckrolle 37 von dem Schwinghebel 29 hin- und herbewegt wird.

Man erkennt, daß die Druckfeder 33 zusammengedrückt wird und bestrebt ist, das Druckelement 31 nach unten zu drücken, wenn der Einschalthebel 15 im Uhrzeigersinne in Richtung des Pfeiles 39 verschwenkt wird. Wird der Einschalthebel 15 losgelassen, wird kein Druck mehr auf das Druckstück 26 ausgeübt, es bleibt jedoch infolge seines Eigengewichtes auf dem oberen Bandende 11b liegen. Damit es sich abheben kann und das Druckelement 31 in eine obere Ruhelage zurückkehrt, in der der oben erwähnte Bandkanal 20 zum Einlegen und Herausnehmen der Bänder frei wird, sind zwei Hubfedern 40 und 41 vorgesehen, von denen die obere Hubfeder 40 sich einerseits auf einem über der Gleitführung 32 angeordneten Ring 42 und andererseits gegen die Unterseite des oberen Bundes 34 abstützt und von denen die untere Hubfeder 41 auf dem Schwinghebel 29 aufliegt und von unten her gegen einen Zapfenbund 43 drückt. Hierdurch halten Druckelement 31, Druckrolle 37 und der Zapfen 28 mit seinem Druckstück 26 auch in angehobenem Zustand Formschluß.

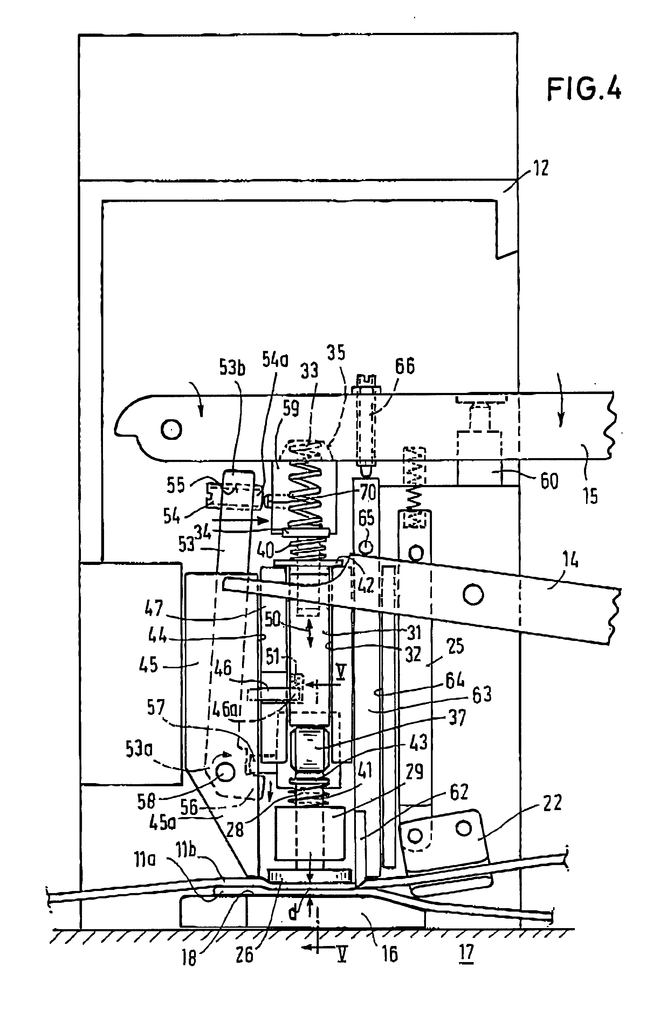

Man erkennt aus den Fig. 3 und 4, daß seitlich neben der ersten Gleitführung 32 für das Druckelement 31 eine zweite Gleitführung 44 vorgesehen ist, in der ein Fühlelement 45 parallel zum Druckelement 31 gleiten kann. Auf der dem Druckelement 31 zugewandten Seite hat das Fühlelement 45 einen Mitnehmerzapfen 46, der ein in der Wand 47 zwischen den Gleitführungen 32 und 44 angeordnetes Langloch 48 durchgreift und dessen freies Ende 46a in eine längliche Ausnehmung 49 eingreift, die in dem Druckelement 31 angeordnet ist und sich in dessen Axialrichtung 50 erstreckt. Hierbei steht das freie Ende 46a des Mitnehmerzapfens 46 unter der Wirkung eines kleinen Federelementes 51, welches den Mitnehmerzapfen 46 gegen die der Stützfläche 18 zugewandte Stirnseite 52 der länglichen Ausnehmung 49 gedrückt hält.

Hinter dem Fühlelement 45 befindet sich ein Betätigungselement 53 in Form eines Winkelhebels, das am unteren Ende 45a des Fühlelementes 45 schwenkbar gelagert ist und an seinem oberen,freien Ende 53b einen Schaltfinger 54 trägt. Der Schaltfinger 54 ist als Madenschraube ausgebildet und in einer Gewindebohrung 55 derart verstellbar, daß sein Fußende 54a mehr oder weniger weit über das Betätigungselement 53 vorsteht.

An seinem unteren Ende 53a hat das Betätigungselement 53 einen seitlich abstehenden Schenkel 56, der von einem am Druckelement 31 angeordneten Mitnehmer 57 derart beaufschlagt wird, daß das Betätigungselement 53 im Uhrzeigersinne um seinen Schwenkzapfen 58 schwenkt, wenn sich das Druckelement 31 relativ zum Fühlelement 45 nach unten verschiebt.

Zum Ein- und Ausschalten der Schweissvorrichtung 19 sind ein erster Schalter 59 und ein zweiter Schalter 60 vorgesehen, die in Reihe geschaltet sind. Der erste Schalter 59 hat einen Ruhekontakt, der ihn normalerweise in seiner geschlossenen Stellung hält. Der zweite Schalter 60 dagegen ist normalerweise offen und wird geschlossen, wenn der Einschalthebel 15 auf ihn niedergedrückt wird. Sind beide Schalter 59 und 60 geschlossen, wird die Schweissvorrichtung 19 mit Strom versorgt und hierdurch in Tätigkeit gesetzt.

Die in den Fig. 3 und 4 dargestellte Vorrichtung hat außerdem noch eine Abschneidevorrichtung 61, mit der das obere Bandende 11b während des Schweißvorganges abgeschnitten wird. Die Abschneidevorrichtung 61 besteht aus einem Messer 62, das am unteren Ende einer Messerstange 63 befestigt ist, die in einer dritten Gleitführung 64 parallel zu dem Druckelement 31 geführt ist. Sie wird beim Lüften der Klemme 22 durch den Klemmhebel 14 mit angehoben, der unter den Hubzapfen 65 greift. Beim Niederschwenken des Einschalthebels 15 wird er von einem Druckstift 66 niedergedrückt, der in dem Einschalthebel 15 angeordnet ist.

Die Wirkungsweise der Vorrichtung ist folgende:

Nachdem das Band 11 um das Packstück 17 herumgelegt und die Bandenden 11a und 11b bei gelüfteter Klemme 22 in den Bandkanal 20 eingelegt wurden und das untere Bandende 11a durch Loslassen des Klemmhebels 14 festgeklemmt wurde, wird das obere Bandende 11b durch Zug in Richtung des Pfeiles 24 gespannt. Die Vorrichtung 10 befindet sich dann in der in Fig. 3 dargestellten Lage, in der das Druckstück 26 und das Fühlelement 45 sich oberhalb der an der Schweißstelle 21 übereinanderliegenden Bandenden 11a und 11b befinden. Der erste Schalter 59 ist geschlossen und der zweite Schalter 60 für die Schweissvorrichtung 19 ist geöffnet.

Um die Bandenden 11a und 11b miteinander zu verschweißen, wird der Einschalthebel 15 niedergedrückt. Er schwenkt hierbei im Uhrzeigersinne und erzeugt folgende Wirkungen:
a) Er drückt die Druckfeder 33 zusammen, die hierdruch den Druck der Hubfedern 40 und 41 überwindet und das Druckelement 31 und mit ihm das Fühlelement 45, die Druckrolle 37, den Zapfen 28 und das Druckstück 26 gegen die Oberfläche 67 der aufeinanderliegenden Bandenden 11a und 11b drückt;
b) er drückt mit dem Druckstift 66 über die Messerfeder 68 die Messerstange 63 nach unten, so daß die Schneide des Messers 62 unter Federdruck auf dem oberen Bandende 11b aufliegt;
c) er drückt auf den Schaltstift 69 des zweiten Schalters 60 und schließt hierdurch den Stromkreis, über den der Schweissvorrichtung 19 Energie zugeführt wird.

Der hierdurch in Bewegung gesetzte, nicht näher dargestellte Antrieb bewegt nun den Schwinghebel 29 in Richtung des Pfeiles 30 hin und her, der hierbei das obere Bandende 11b gegenüber dem festgehaltenen unteren Bandende 11a im Schweißbereich an der Schweißstelle 21 so lange reibt, bis unter dem Druck des Druckelementes 31 ausreichend Reibungswärme erzeugt wird, die das Bandmaterial an den einander zugewandten Oberflächen schmelzen und ineinander übergehen läßt.

Bei diesem Schmelzvorgang wird das mit dem Druckelement 31 verbundene Druckstück 26 tiefer gedrückt, während das Fühlelement 45, welches neben der Schweißstelle 21 auf den Bändern im nichtverschweißten Bereich aufliegt, seine Höhenlage beibehält.

Beim Niedergehen des Druckelementes 31 gleitet das freie Ende 46a des Mitnehmerzapfens 46 entgegen der Wirkung des kleinen Federelementes 51 in der länglichen Ausnehmung 49 nach oben, während der am Druckelement 31 befestigte Mitnehmer 57 auf das untere Ende 53a des Betätigungselementes 53 drückt. Dieses wird hierdurch im Uhrzeigersinne um den Schwenkzapfen 58 geschwenkt und drückt mit dem an seinem freien, oberen Ende 53b angeordneten Schaltfinger 54 gegen den Schaltstift 70 des ersten Schalters 59.

Sobald der Abstand d zwischen dem Druckstück 26, welches die tiefste Stelle des Druckelementes 31 darstellt, und der Stützfläche 18 und damit die Gesamtdicke der miteinander verschweißten Bänder an der Schweißstelle 21 einen vorherbestimmten Sollwert unterschreitet, wird der Schaltstift 70 von dem Betätigungselement 53 soweit niedergedrückt, daß sich der Ruhekontakt des ersten Schalters 59 öffnet. Hierdurch wird der Antrieb der Reibschweißvorrichtung unterbrochen, der Schwinghebel 29 und das Druckstück 26 bleiben stehen und es wird keine Reibungswärme mehr erzeugt, das heißt die Wärmezufuhr wird unterbrochen.

Man erkennt, daß der optimale Sollwert für die Gesamtdicke der aufeinanderliegenden, verschweißten Bänder an der Schweißstelle durch Hineinschrauben oder Herausschrauben des Schaltfingers 54 im Betätigungselement 53 eingestellt werden kann.

Man erkennt, daß es mit den beschriebenen Vorrichtungen möglich ist, durch Ermittlung der Änderung der Gesamtdicke der miteinander zu verschweißenden Bänder festzustellen, ob eine richtige Verschweißung zustandegekommen ist. Erst nach dem Erreichen einer vorherbestimmten Gesamtdicke der miteinander verschweißten Bänder an der Schweißstelle wird die Schweißwärmezufuhr unterbrochen, indem ein Steuersignal zum Beendigen der Schweißwärmezufuhr erzeugt oder ein Ausschalter betätigt wird.

Die Erfindung ist nicht auf die dargestellten und beschriebenen Ausführungsformen beschränkt, sondern es sind mehrere Änderungen und Ergänzungen möglich, ohne den Rahmen der Erfindung zu verlassen.

Wie bereits oben angedeutet, kann die Schweißwärme auch auf andere Weise, beispielsweise durch elektrische Widerstandsheizdrähte erzeugt werden, die zwischen die miteinander zu verschweißenden Bänder eingeführt werden und nach Beendigung des Schweißvorganges an der Schweißstelle verbleiben und mit dem oberen Bandenede abgeschnitten werden. Es ist auch möglich, zwischen die Bänder ein Drahtgitter einzulegen und dieses induktiv zu erwärmen und den Induktionsstrom abzuschalten, sobald die Schweißstelle die gewünschte Dicke erreicht hat, bei der die Bandoberflächen innig miteinander verschmolzen sind.

## Patentansprüche

1. Vorrichtung zum Verschweißen von Bändern (11) aus thermoplastischem Kunststoff, insbesondere von Verpackungsbändern aus Polypropylen, mit einer Schweissvorrichtung (19) zum Erwärmen durch Reibung der einander zugewandten Schweißflächen der miteinander zu verbindenden Bänder (11) und mit einem an der Schweißstelle (21) etwa senkrecht zu den Schweißflächen bewegbaren Druckelement (31) zum Zusammenpressen der auf einer Stützfläche (18) übereinander angeordneten Bänder (11), **dadurch gekennzeichnet, daß** das Druckelement (31) mit einem Fühlelement (45) verbunden ist, welches die Oberfläche (67) der aufeinanderliegenden unverschweißten Bänder (11) abtastet und ein Betätigungselement (53) zum Ausschalten der Schweissvorrichtung (19) aufweist und daß das Druckelement (31) gegenüber dem Fühlelement (45) in Richtung auf die Stützfläche (18) begrenzt axial verschiebbar ist und bei seiner Verschiebung auf das Betätigungselement (53) einwirkt.

2. Vorrichtung nach Anspruch 1, **dadurch gekennzeichnet, daß** das Betätigungselement (53) ein am Fühlelement (45) schwenkbar gelagerter Hebel ist, der von einem am Druckelement (31) angeordneten Mitnehmer (57) beaufschlagt wird und an einem freien Ende (53b) einen verstellbaren Schaltfinger (54) aufweist, der einen ersten Schalter (59) betätigt, wenn die Verschiebung des Druckelementes (31) gegenüber dem Fühlelement (45) einen vorherbestimmten Wert erreicht.

3. Vorrichtung nach Anspruch 2, **dadurch gekennzeichnet, daß** der erste Schalter (59) einen Ruhekontakt aufweist und mit einem zweiten Schalter (60) in Reihe geschaltet ist, der die Schweissvorrichtung (19) einschaltet, wenn er bei der Druckbeaufschlagung des Druckelementes (31) betätigt wird.

4. Vorrichtung nach einem der Ansprüche 1 bis 3, **dadurch gekennzeichnet, daß** das Fühlelement (45) einen Mitnehmerzapfen (46) aufweist, dessen freies Ende (46a) in eine sich in Axialrichtung (50) erstreckende, längliche Ausnehmung (49) des Druckelementes (31) eingreift, in der es von einem Federelement (51) gegen die der Stützfläche (18) zugewandte Stirnseite (52) der Ausnehmung (49) gedrückt gehalten wird und in der es sich entgegen der Wirkung des Federelementes (51) verschieben kann, wenn sich das Druckelement (31) beim Verschweißen gegenüber dem Fühlelement (45) in Richtung auf die Stützfläche (18) verschiebt.

5. Vorrichtung nach einem der Ansprüche 1 bis 4, **dadurch gekennzeichnet, daß** die Schweissvorrichtung (19) eine Reibschweißvorrichtung ist, deren Schwinghebel (29) ein das obere Band (11b) erfassendes Druckstück (26) bewegt, welches Teil des Druckelementes (31) ist und zusammen mit diesem in Richtung auf die Stützfläche (18) gedrückt wird und von dem Schwinghebel (29) quer zur Bandebene bewegt wird und zwischen den Bändern (11a, 11b) an der Schweißstelle (21) Reibungswärme erzeugt.

## Claims

1. An apparatus for welding straps (11) of thermoplastic plastics, particularly packaging straps made of polypropylene, comprising a welding device (19) for heating mutually facing faces of the straps (11) which are to be joined to each other, and comprising a pressure element (31) which can be moved at the weld location (21) approximately perpendicularly to the weld faces in order to compress the straps (11) which are superimposed on a supporting surface (18), c**haracterised in that** the pressure element (31) is connected to a sensing element (45) which senses the surface (67) of the superimposed unwelded straps (11) and which comprises an operating element (53) for switching off the welding device (19), and that the pressure element (31) is displaceable to a limited extent in relation to the sensing element (45) in a direction towards the supporting surface (18) and during its displacement acts on the operating element (53).

2. An apparatus according to claim 1, **characterised in that** the operating element (53) is a lever which is swivel-mounted on the sensing element (45), which is acted upon by a driver (57) disposed on the pressure element (31) and which comprises an adjustable switching finger (54) at one free end (53b), which switching finger operates a first switch (59) when the displacement of the pressure element (31) in relation to the sensing element (45) reaches a predetermined value.

3. An apparatus according to claim 2, **characterised in that** the first switch (59) comprises a normally closed contact and is connected in series with a second switch (60) which switches on the welding device (19) if it is operated during the action of pressure of the pressure element (31).

4. An apparatus according to any one of claims 1 to 3, **characterised in that** the sensing element (45) comprises a driver pin (46), the free end (46a) of which fits into an elongated recess (49), which extends in an axial direction (50), in the pressure element (31), in which recess it is held pressed by a spring element (51) against the end face (52) of the recess (49) which faces the supporting surface (18), and in which recess it can move against the action of the spring element (51) when the pressure element (31) moves in relation to the sensing element (45) in a direction towards the supporting surface (18) during welding.

5. An apparatus according to any one of claims 1 to 4, **characterised in that** the welding device (19) is a friction welding device, the oscillating lever (29) of which moves a pressure piece (26) which contacts the upper strap (11b), which pressure piece is part of the pressure element (31) and is pressed together with the latter in a direction towards the supporting surface (18) and is moved transversely to the plane of the straps by the oscillating lever (29) and generates frictional heat between the straps (11a, 11b) at the weld location (21).

## Revendications

1. Dispositif de soudage de bandes (11) en matière synthétique thermoplastique, en particulier de bandes d'emballage en polypropylène, avec un dispositif de soudage (19), pour chauffer par frottement les surfaces de soudage, tournées l'une vers l'autre, des bandes (11) à relier ensemble, et avec un élément de pressage (31) déplaçable sur le point de soudage (21), à peu près perpendiculairement par rapport aux surfaces de soudage, pour comprimer les bandes (11) disposées les unes au dessus des autres sur une surface d'appui (18), **caractérisé en ce que** l'élément de pressage (31) est relié à un élément sensible (45), qui palpe la surface (67) des bandes (11) non soudées, situées les unes au-dessus des autres, et présente un élément d'actionnement (53) pour mettre hors service le dispositif de soudage (19), et **en ce que** l'élément de pressage (31) est déplaçable axialement de façon limitée par rapport à l'élément sensible (45), en direction de la surface d'appui (18) et, lors de son déplacement, agit sur l'élément d'actionnement (53).

2. Dispositif selon la revendication 1, **caractérisé en ce que** l'élément d'actionnement (53) est un levier monté à pivotement sur l'élément sensible (45), levier sollicité par un organe d'entraînement (57) disposé sur l'élément de pressage (31), et présente, à une extrémité libre (53b), un doigt de commutation (54) réglable, qui actionne un premier interrupteur (59), lorsque le déplacement de l'élément de pressage (31) par rapport à l'élément sensible (45) atteint une valeur prédéterminée à l'avance.

3. Dispositif selon la revendication 2, **caractérisé en ce que** le premier interrupteur (59) présente un contact de repos et est branché en série avec un deuxième interrupteur (60) qui met en service le dispositif de soudage (19), lorsqu'il est actionné lors de la sollicitation en pression de l'élément de pressage (31).

4. Dispositif selon l'une des revendications 1 à 3, **caractérisé en ce que** l'élément sensible (45) présente un téton d'entraînement (46) dont l'extrémité libre (46a) s'engage dans un évidement (49) allongé, s'étendant dans la direction axiale (50), de l'élément de pressage (31), évidement dans lequel il est maintenu pressé, par un élément élastique (51), contre la face frontale (52), tournée vers la surface d'appui (18), de l'évidement (49), et dans lequel il peut se déplacer, à l'encontre de l'effet exercé par l'élément élastique (51), lorsque l'élément de pressage (31), lors du soudage, se déplace par rapport à l'élément sensible (45), dans la direction de la surface d'appui (18).

5. Dispositif selon l'une des revendications 1 à 4, **caractérisé en ce que** le dispositif de soudage (19) est un dispositif de soudage à friction, dont le levier oscillant (29) déplace une pièce de pressage (26) saisissant la bande supérieure (11b), pièce de pressage faisant partie de l'élément de pressage (31) et comprimée, conjointement avec celui-ci, dans la direction de la surface d'appui (18) et déplacée, par le levier oscillant (29), transversalement par rapport au plan de bande et générant une chaleur de frottement à l'emplacement de soudage (21), entre les bandes (11a, 11b).
